# EUROPEAN PATENT APPLICATION

(11) **EP 3 937 081 A1**
(43) Date of publication of application: **12.01.2022**
(21) Application number: 20184495.8
(22) Date of filing: 07.07.2020
(51) Int. Cl.: G06K 9/62, G06K 9/00

(54) **PEER VEHICLE BEHAVIOR PREDICTION SYSTEM AND METHOD**

(71) Applicant: KNORR-BREMSE Systeme für Nutzfahrzeuge GmbH, 80809 München (DE)
(72) Inventor: KARZ, Gergely Jakab, Budapest H-1157 (HU); BoKA, Jeno, 2120 Dunakeszi (HU); DUDAS, Zsolt, 6728 Szeged (HU); GYENIS, Tamás, 1115 Budapest (HU); LINDENMAIER, Laszlo, 2040 Budaors (HU); NEMETH, Huba, 1116 Budapest (HU); LÓRÀNT, Szabó, 6000 Kecskemét (HU); SZAPPANOS, Andras, 2093 Budajeno (HU); SZÖLLOSI, Adam, 1119 Budapest (HU); VÖRÖS, Dániel, 1039 Budapest (HU); GYURKÓ, Zoltán, 8771 Hahót (HU)

(57) **Abstract**

Peer vehicle behaviour prediction can be based on tail light recognition of that vehicle since intended behaviour of the peer vehicle is usually announced by a human driver or an automated driving system by activating tail lights correspondingly. In autonomous vehicle systems, there are multiple sensors that map the environment of the autonomous vehicle. These sensors include LiDARs, cameras, thermal cameras, ultrasonic sensors or others. Optical cameras provide a video stream of the environment. Vehicle tail light recognition can be treated as an application of video acquisition and thus is susceptible to spatial and temporal image recognition. Such spatial and temporal image recognition is susceptible to deep learning approaches. Disclosed is a control system for autonomous driving of a vehicle, comprising a sensor that is configured to detect changes in the illumination state of at least a first kind of indicator lights and a second kind of indicator lights of a peer vehicle, an artificial neural network having a split neural network architecture, configured to recognize the activation state of the indicator lights of the peer vehicle, the artificial neural network comprising at least one spatial features extraction artificial neural network cell configured to extract spatial features of an output of the sensor of the indicator lights of the peer vehicle, a first temporal features extraction artificial neural network cell configured to extract temporal features of the output of the spatial features extraction artificial neural network cell, a second temporal features extraction artificial neural network cell configured to extract temporal features of the output of the spatial features extraction artificial neural network cell, wherein the first temporal features extraction artificial neural network cell is configured to determine changes in the activation state of the first kind of the indicator lights and to classify the first kind of indicator light as active or inactive, and the second temporal features extraction artificial neural network cell is configured to determine changes in the activation state of the second kind of the indicator lights and to classify the second kind of indicator light as active or inactive.

## Description

The invention relates to a control system for autonomous driving of a vehicle, in particular to a control system for autonomous driving of a transport vehicle, as e.g. a truck and trailer combination.

The autonomous operation of transport vehicles is a new field of inventions. Highly sophisticated functions require high-end hardware infrastructure including different types of sensors and perception technologies. Until now, SAE Automation level 2 systems require presence and attention of a driver. SAE Automation level 3 systems should manage autonomous driving without continuous attention of the driver. This requires interaction with peer vehicles.

Until now, in particular in the field of commercial vehicles and trucks, no satisfying solution or consideration which is able to handle such interaction situations and which is able to carry out minimal risk safety manoeuvre even in the environment of automated or man driven peer vehicles has been known.

Therefore, the object underlying the invention is to enable a more reliable interaction of an autonomously driving vehicle with peer vehicles.

The object is achieved by a control system according to claim 1 and a control method according to claim 9. Advantageous further developments are subject-matter of the dependent claims.

Peer vehicle behaviour prediction can be based on tail light recognition of that vehicle since intended behaviour of the peer vehicle is usually announced by a human driver or an automated driving system by activating tail lights correspondingly. As known, activation of brake lights indicates an imminent deceleration of the peer vehicle, activation of turn lights indicates a change of course in the respective direction.

In autonomous vehicle systems, there are multiple sensors that map the environment of the autonomous vehicle. These sensors include LiDARs, cameras, thermal cameras, ultrasonic sensors or others. Optical cameras provide a video stream of the environment. Vehicle tail light recognition can be treated as an application of video acquisition and thus is susceptible to spatial and temporal image recognition. Such spatial and temporal image recognition is susceptible to deep learning approaches.

Convolutional neural networks (CNN) are used to extract spatial features like different tail light positions and recurrent neural networks (RNN) such as a Long Short-Term Memory network (LSTM) is used to determine temporal features like a light sequence to classify tail light states. Separate LSTM cells in a split neural network architecture are used for each tail light. Thus, to extract signals indicating intended behaviour of a peer vehicle, a deep neural network architecture is proposed including a three way junction and separate LSTM cells in a split neural network architecture for each peer vehicle tail light that do three independent binary classification tasks for the left, right and break lamps, respectively.

To filter noise and reflections of the prisms and vehicle bodies, temporal features can be considered along with spatial features.

Disclosed is a control system for autonomous driving of a vehicle, comprising a sensor that is configured to detect changes in the illumination state of at least a first kind of indicator lights and a second kind of indicator lights of a peer vehicle and to provide input information, detecting means that receives the input information and that is configured to determine changes in the activation state of the first kind of the indicator lights and to classify the first kind of indicator light as active or inactive, and to determine changes in the activation state of the second kind of the indicator lights and to classify the second kind of indicator light as active or inactive. The control system allows anticipation of peer vehicle behavior and enables adaption of behavior of autonomous driving vehicles.

Disclosed is further a control system for autonomous driving of a vehicle, comprising a sensor that is configured to detect changes in the illumination state of at least a first kind of indicator lights and a second kind of indicator lights of a peer vehicle, an artificial neural network having a split neural network architecture, configured to recognize the activation state of the indicator lights of the peer vehicle, the artificial neural network comprising at least one spatial features extraction artificial neural network cell configured to extract spatial features of an output of the sensor of the indicator lights of the peer vehicle, a first temporal features extraction artificial neural network cell configured to extract temporal features of the output of the spatial features extraction artificial neural network cell, a second temporal features extraction artificial neural network cell configured to extract temporal features of the output of the spatial features extraction artificial neural network cell, wherein the first temporal features extraction artificial neural network cell is configured to determine changes in the activation state of the first kind of the indicator lights and to classify the first kind of indicator light as active or inactive, and the second temporal features extraction artificial neural network cell is configured to determine changes in the activation state of the second kind of the indicator lights and to classify the second kind of indicator light as active or inactive.

Preferably, at least one spatial features extraction artificial neural network cell is a convolutional neural network cell.

Preferably, the first temporal features extraction artificial neural network cell or the second temporal features extraction artificial neural network cell is a Long Short-Term Memory network cell.

Preferably, the first kind of the indicator light is one of the group of a left turn indicator light, in particular a left turn indicator back light, a right turn indicator light, in particular a right turn indicator back light or a brake light, in particular a central brake back light, the second kind of the indicator light is one of the group of a left turn indicator light, in particular a left turn indicator back light, a right turn indicator light, in particular a right turn indicator back light or a brake light, in particular a central brake back light, and the first kind of the indicator light is different from the second kind of the indicator light.

Preferably, the artificial neural network comprises a separate temporal features extraction artificial neural network cell for each kind of indicator light of the peer vehicle. Preferably, the artificial neural network is configured such that a spatial attention mechanism is applied or a temporal attention mechanism is applied in the indicator light activation state recognition.

Preferably, the at least one spatial features extraction artificial neural network cell is configured to locate the first kind of indicator light and the second kind of indicator light in the output of the sensor.

Preferably, the artificial neural network is a deep neural network, in particular an artificial neural network trained by deep learning mechanisms.

Disclosed is further a control method for autonomous driving of a vehicle comprising the steps: acquiring of illumination information of a first kind of indicator lights and a second kind of indicator lights of a peer vehicle, providing the illumination information acquired in the acquisition step to detecting means, extracting illumination information relating to the first kind of indicator lights by a the detecting means, and extracting illumination information relating to the second kind of indicator lights by the detecting means, classifying the first kind of indicator lights as active or inactive depending on the result of the extraction of the illumination information relating to the first kind of indicator lights, and classifying the second kind of indicator lights as active or inactive depending on the result of the extraction of the illumination information relating to the second kind of indicator lights.

Disclosed is further a control method for autonomous driving of a vehicle comprising the steps: acquisition of illumination information of a first kind of indicator lights and a second kind of indicator lights of a peer vehicle, providing the illumination information acquired in the acquisition step to an artificial neural network having a split neural network architecture, extracting spatial features from the illumination information by a spatial features extraction artificial neural network cell, extracting temporal features of the illumination information relating to the first kind of indicator lights by a first temporal features extraction artificial neural network cell, and extracting temporal features of the illumination information relating to the second kind of indicator lights by a second temporal features extraction artificial neural network cell, classifying the first kind of indicator lights as active or inactive depending on the result of the extraction of temporal features of the illumination information relating to the first kind of indicator lights by the first temporal features extraction artificial neural network cell, and classifying the second kind of indicator lights as active or inactive depending on the result of the extraction of temporal features of the illumination information relating to the second kind of indicator lights by the second temporal features extraction artificial neural network cell.

Preferably, the method comprises extracting steps and classification steps for each kind of indicator lights of the peer vehicle.

Preferably, the method further comprises the step of application of a spatial attention mechanism.

Preferably, the method further comprises the step of application of a temporal attention mechanism.

Below, the invention is elucidated by means of embodiments referring to the attached drawings.
- Fig. 1: exhibits a vehicle including and implementing a first embodiment of the invention.
- Fig. 2: exhibits a block diagram of an artificial neural network according to the invention.
- Fig. 3: exhibits a flow chart of an embodiment according to the invention.

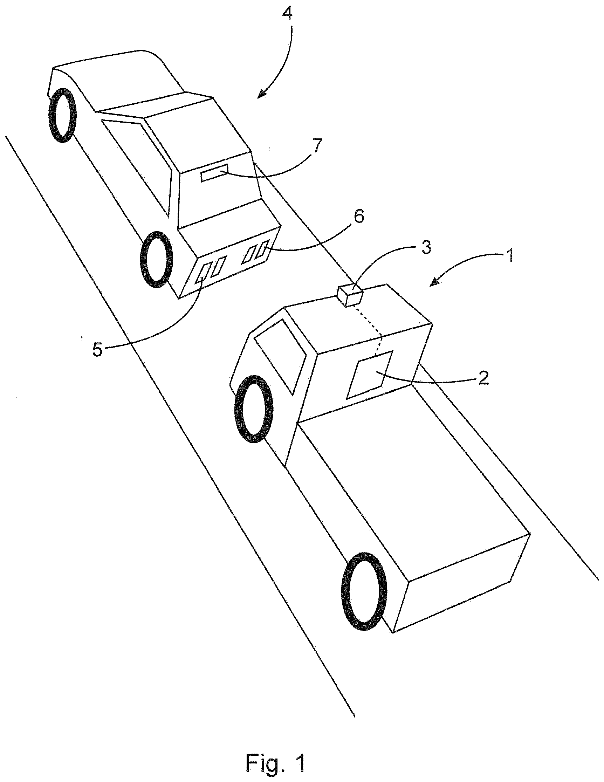

**Fig. 1** exhibits a vehicle 1 including a control system 2 according to the invention. In this embodiment, the vehicle 1 is a tractor of a trailer truck, however, any appropriate vehicle can be equipped with the control system 2.

The control system 2 is provided with an environment sensor architecture comprising a first sensor 3. In the embodiment, first sensor 3 is a visual light video camera directed towards the front of the vehicle 1. However, instead of a video camera, first sensor may be embodied by any sensor that is capable of detecting differences in activated or not activates states of tail lights of a leading vehicle like, ir-cameras or other optical sensors. The first sensor 3 is directed towards a leading peer vehicle 4 having a left turn light 5, a right turn light 6 and a central brake light 7.

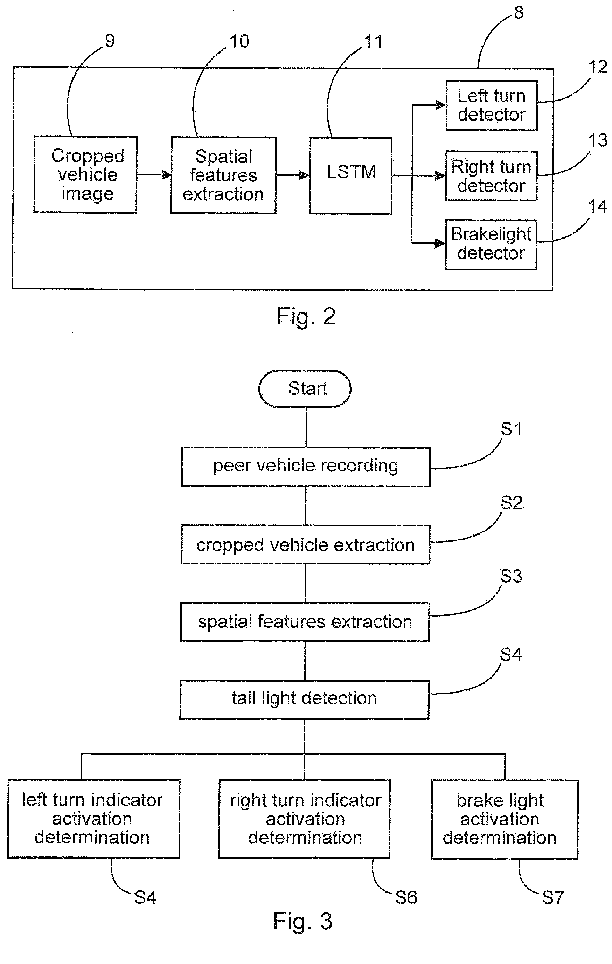

The control system 2 comprises an artificial neural network 8 corresponding to the block diagram of **Fig. 2**. The artificial neural network 8 is of a split neural network architecture and contains several cells. The video stream recorded by the first sensor 3 is fed to a first convolutional neural network cell 9 to determine a cropped vehicle image of a leading peer vehicle 4. The output of the first convolutional neural network cell 9 is fed to a second convolutional neural network cell 10 that extracts the spatial features of the cropped vehicle image to determine the positions of the leading peer vehicle's tail lights, i.e. the left turn light 5, the right turn light 6 and the central brake light 7. The output of the second convolutional neural network cell 10 is fed to a first Long Short-Term Memory network (LSTM) 11 to determine temporal features of the input like a change in state of the detected tail lights (5, 6, 7). The artificial neural network 8 includes a three way junction separating recognition of activation of the left turn indicator back light 5 in a second LSTM (12), recognition of activation of the right turn indicator back light 6 in a third LSTM (13) and recognition of activation of the central brake back light 7 in a fourth LSTM (14). The second, third and fourth LSTM do three independent binary classification tasks for the state of the left turn indicator back light 5, the right turn indicator back light 6 and the central brake back light 7.

**Fig. 3** exhibits a flow chart of a method according to the invention. In a recording step S1, a video stream of the leading peer vehicle 4 is recorded by the first sensor 3.

In a cropped vehicle extraction step S2, a first video camera frame of the video stream is fed to the artificial neural network 8. In the first convolutional neural network cell 9, a cropped vehicle image of the leading peer vehicle is determined.

In a spatial feature extraction step S3, the cropped vehicle image is fed to the second convolutional neural network cell 10. In the second convolutional neural network cell 10, spatial features, i.e. the location of the back lights are extracted.

In a tail light detector step S4, the extracted spatial features are fed to the first LSTM 11 to detect temporal features, i.e. the state change of a back light.

In a left turn indicator back light activation determination step S5, the output of the first LSTM 11 is fed to the second LSTM 12. The second LSTM 12 determines temporal features of the left turn indicator back light 5, i. e. a change in the activation state of the left turn indicator back light 5. A corresponding classification is applied by the second LSTM.

In a right turn indicator back light activation determination step S6, the output of the first LSTM 11 is fed to the third LSTM 13. The third LSTM 13 determines temporal features of the right turn indicator back light 6, i. e. a change in the activation state of the left turn indicator back light 6. A corresponding classification is applied by the second LSTM.

In a brake back light activation determination step S7, the output of the first LSTM 11 is fed to the fourth LSTM 14. The fourth LSTM 14 determines temporal features of the central brake back light 7, i. e. a change in the activation state of the central brake back light 7. A corresponding classification is applied by the second LSTM.

The invention was described by means of an embodiment. The embodiment is only of explanatory nature and does not restrict the invention as defined by the claims. As recognizable by the skilled person, deviations from the embodiment are possible without leaving the invention according to the scope of the claimed subject-matter.

In the above embodiment, the application of artificial neural networks, in particular convolutional neural networks is described. However, any detector is applicable that is capable of detecting the state change of vehicle indicator lights.

In the above embodiment, the first sensor 3 is a front facing sensor observing a lead peer vehicle. In addition or instead, a second sensor 3' may be applied facing to the rear of the vehicle 1 to determine the indicator light state of a trailing peer vehicle. By that, e.g. an imminent overtaking procedure of a trailing peer vehicle may be recognized. Further, a third sensor 3" may be applied facing to either or both sides of the vehicle 1 to determine the indicator light state of a passing peer vehicle.

In this document, the terms "and", "or" and "either ... or" are used as conjunctions in a meaning similar to the logical conjunctions "AND", "OR" (often also "and/or") or "XOR", respectively. In particular, in contrast to "either... or", the term "or" also includes occurrence of both operands.

Method steps indicated in the description or the claims only serve an enumerative purpose of the required method steps. They only imply a given sequence or an order where their sequence or order is explicitly expressed or is - obvious for the skilled person - mandatory due to their nature. In particular, the listing of method steps do not imply that this listing is exhaustive.

In the claims, the word "comprising" does not exclude other elements or steps, and the indefinite article "a" or "an" does not exclude a plurality and has to be understood as "at least one".

### LIST OF REFERENCE SIGNS

- 1: vehicle
- 2: control system
- 3: first sensor
- 3': second sensor
- 3": third sensor
- 4: peer vehicle
- 5: left turn indicator back light
- 6: right turn indicator back light
- 7: central brake back light
- 8: artificial neural network
- 9: first convolutional neural network cell
- 10: second convolutional neural network cell
- 11: first Long Short-Term Memory network (LSTM)
- 12: second Long Short-Term Memory network (LSTM)
- 13: third Long Short-Term Memory network (LSTM)
- 14: fourth Long Short-Term Memory network (LSTM)
- S1: recording step
- S2: cropped vehicle extraction step
- S3: spatial feature extraction step
- S4: tail light detector step
- S5: left turn indicator back light activation determination step
- S6: right turn indicator back light activation determination step
- S7: brake back light activation determination step

## Claims

1. A control system (2) for autonomous driving of a vehicle (1), comprising
a sensor (3) that is configured to detect changes in the illumination state of at least a first kind of indicator lights and a second kind of indicator lights (5, 6, 7) of a peer vehicle (4) and to provide input information,
detecting means (8) that receives the input information and that is configured to determine changes in the activation state of the first kind of the indicator lights and to classify the first kind of indicator light as active or inactive, and to determine changes in the activation state of the second kind of the indicator lights and to classify the second kind of indicator light as active or inactive.

2. The control system (2) according to the preceding claim, wherein
the detector (8) is an artificial neural network having a split neural network architecture, configured to recognize the activation state of the indicator lights (5, 6, 7) of the peer vehicle (4) based on the input information, the artificial neural network (8) comprising
at least one spatial features extraction artificial neural network cell (9, 10) configured to extract spatial features of an output of the sensor (3) of the indicator lights (5, 6, 7) of the peer vehicle (4),
a first temporal features extraction artificial neural network cell (12) configured to extract temporal features of the output of the spatial features extraction artificial neural network cell (9, 10),
a second temporal features extraction artificial neural network cell (13) configured to extract temporal features of the output of the spatial features extraction artificial neural network cell (9, 10), wherein
the first temporal features extraction artificial neural network cell (12) is configured to determine changes in the activation state of the first kind of the indicator lights and to classify the first kind of indicator light as active or inactive, and
the second temporal features extraction artificial neural network cell (13) is configured to determine changes in the activation state of the second kind of the indicator lights and to classify the second kind of indicator light as active or inactive.

3. The control system (2) according to the preceding claim, wherein the at least one spatial features extraction artificial neural network cell (9, 10) is a convolutional neural network cell.

4. The control system (2) according to any of claims 2 and 3, wherein the first temporal features extraction artificial neural network cell (12) or the second temporal features extraction artificial neural network cell (13) is a Long Short-Term Memory network cell.

5. The control system (2) according to any of the preceding claims, wherein
the first kind of the indicator light is one of the group of a left turn indicator light, in particular a left turn indicator back light (5), a right turn indicator light, in particular a right turn indicator back light (6), or a brake light, in particular a central brake back light (7),
the second kind of the indicator light is one of the group of a left turn indicator light, in particular a left turn indicator back light (5), a right turn indicator light, in particular a right turn indicator back light (6), or a brake light, in particular a central brake back light (7), and
the first kind of the indicator light is different from the second kind of the indicator light.

6. The control system (2) according to any of claims 2 to 5, wherein the artificial neural network (8) comprises a separate temporal features extraction artificial neural network cell (12, 13, 14) for each kind of indicator light of the peer vehicle (4).

7. The control system (2) according to any of claims 2 to 6, wherein the artificial neural network (8) is configured such that a spatial attention mechanism is applied or a temporal attention mechanism is applied in the indicator light activation state recognition.

8. The control system (2) according to any of claims 2 to 7, wherein the at least one spatial features extraction artificial neural network cell (10) is configured to locate the first kind of indicator light and the second kind of indicator light in the output of the sensor (3).

9. The control system (2) according to any of claims 2 to 8, wherein artificial neural network (8) is a deep neural network, in particular an artificial neural network trained by deep learning mechanisms.

10. A control method for autonomous driving of a vehicle (1) comprising the steps:
acquiring of illumination information of a first kind of indicator lights and a second kind of indicator lights (5, 6, 7) of a peer vehicle (4),
providing the illumination information acquired in the acquisition step to detecting means (8),
extracting illumination information relating to the first kind of indicator lights by a the detecting means, and
extracting illumination information relating to the second kind of indicator lights by the detecting means,
classifying the first kind of indicator lights as active or inactive depending on the result of the extraction of the illumination information relating to the first kind of indicator lights b, and
classifying the second kind of indicator lights as active or inactive depending on the result of the extraction of the illumination information relating to the second kind of indicator lights.

11. The control method for autonomous driving of a vehicle (1), wherein:
the step of providing the illumination information acquired in the acquisition step comprises providing the illumination information to - as the detecting means - an artificial neural network (8) having a split neural network architecture,
the method comprises a further step of extracting spatial features from the illumination information by a spatial features extraction artificial neural network cell (9, 10),
the step of extracting the illumination information relating to the first kind of indicator lights comprises extracting the illumination information relating to the first kind of indicator lights by a first temporal features extraction artificial neural network cell, and
the step of extracting temporal features of the illumination information relating to the second kind of indicator lights comprises extracting the illumination information relating to the second kind of indicator lights by a second temporal features extraction artificial neural network cell, v
the step of classifying the first kind of indicator lights as active or inactive comprises classifying the first kind of indicator lights as active or inactive depending on the result of the extraction of temporal features of the illumination information relating to the first kind of indicator lights by the first temporal features extraction artificial neural network cell, and
the step of classifying the second kind of indicator lights as active or inactive comprises classifying the second kind of indicator lights as active or inactive depending on the result of the extraction of temporal features of the illumination information relating to the second kind of indicator lights by the second temporal features extraction artificial neural network cell.

12. The control method according to claim 11, wherein the at least one spatial features extraction artificial neural network cell (9, 10) is a convolutional neural network cell.

13. The control method according to any of claims 11 and 12, wherein the first temporal features extraction artificial neural network cell (12) or the second temporal features extraction artificial neural network cell (13) is a Long Short-Term Memory network cell.

14. The control method according to any of the preceding method claims, wherein the method comprises extracting steps and classification steps for each kind of indicator lights of the peer vehicle.

15. The control method according to any of the preceding method claims, further comprising the step:
application of a spatial attention mechanism.

16. The control method according to any of the preceding method claims, further comprising the step:
application of a temporal attention mechanism.
